# DEMANDE DE BREVET EUROPEEN

(11) **EP 4 610 033 A1**
(43) Date de publication de la demande: **03.09.2025**
(21) Numéro de dépôt: 25160473.2
(22) Date de dépôt: 27.02.2025
(51) Int. Cl.: B29C 70/54, B29C 33/44, B29D 99/00, B29C 33/48, B29C 33/76, B64C 1/00, B29L 31/30

(54) **NOYAU POUR LE MOULAGE D'UN PROFILÉ COMPOSITE CREUX ET PROCÉDÉ DE MOULAGE UTILISANT UN TEL NOYAU**

(30) Priorité: 28.02.2024 FR 2401937
(71) Demandeur: Loiretech Ingenierie, 44340 Bouguenais (FR)
(72) Inventeur: MORET, Marc, 44240 La chapelle sur Erdre (FR)
(74) Mandataire: Ipside

(57) **Abrégé**

L'invention concerne un noyau (110) de moulage comprenant une pluralité de tranches (111) alignées selon une direction longitudinale (X) d'extension du noyau et un organe d'extraction reliant mécaniquement les tranches entre elles de sorte que lesdites tranches soient mobiles en translation selon la direction longitudinale et puissent être rapprochées et éloignées les unes des autres, lesdites tranches étant en outre configurées pour fléchir chacune autour d'un axe transversal (Y) sensiblement orthogonal à ladite direction longitudinale, le noyau étant configuré pour adopter :
- une configuration dite de moulage, dans laquelle les tranches sont rapprochées les unes des autres, de sorte à former ensemble un noyau compact et
- une configuration dite d'extraction, dans laquelle lesdites tranches sont successivement sollicitées mécaniquement par l'organe d'extraction, de sorte à ce que les tranches fléchissent successivement sensiblement autour de l'axe transversal et soient successivement éloignées les unes des autres.

## Description

### DOMAINE TECHNIQUE DE L'INVENTION

Le domaine de l'invention est celui des structures composites et de leurs procédés de fabrication.

Plus précisément, l'invention concerne un noyau pour le moulage d'un profilé composite creux sur, ou avec, une pièce composite.

L'invention a également pour objet un dispositif de moulage comportant un tel noyau.

L'invention a également pour objet un procédé de moulage d'un profilé composite creux sur une pièce composite au moyen d'un tel dispositif de moulage, comprenant lui-même un tel noyau.

L'invention trouve notamment des applications dans le moulage de raidisseurs sur des peaux composites, pour former des pièces composites telles que des panneaux de fuselage d'aéronef.

L'invention trouve des applications dans les industries technologiques de l'aéronautique et du spatial, mais peut également trouver des applications dans le domaine des véhicules terrestres ou marins, ou encore dans les industries du bâtiment ou de l'énergie.

### ÉTAT DE LA TECHNIQUE

Les structures d'aéronefs, notamment les fuselages d'aéronefs, sont généralement constituées de peaux composites renforcées par des éléments de renforcement.

Par exemple, de tels éléments de renforcement peuvent être des raidisseurs, parfois également appelés longerons, lisses, ou « stringers » en terminologie anglaise.

De tels raidisseurs peuvent en particulier eux-mêmes être en matériau composite, par exemple d'un même matériau que la peau composite qu'ils sont destinés à renforcer.

Les raidisseurs connus se présentent en général sous la forme de profilés composite creux, c'est-à-dire sous la forme d'un élément longiligne présentant une section avec un profil concave, dit femelle, et un profil convexe, dit mâle, opposé au profil femelle. En particulier, le profilé composite creux est ouvert, c'est-à-dire qu'il ne définit pas une section fermée mais plutôt ouverte.

Par la suite, il est fait référence dans la présentation de l'état de la technique et dans l'exposé de l'invention ainsi que dans la description détaillée au terme « raidisseur », l'invention qui sera exposée ci-après pouvant toutefois être généralisée à tout profilé composite creux générique.

Par exemple, la section d'un raidisseur peut présenter un profil dit oméga (Ω), mais peut également présenter une forme en U, en V, en L, en Z ou en Delta, par exemple.

La figure 1 représente schématiquement un panneau composite 1 générique, comprenant une peau composite 2 et une pluralité de raidisseurs 3 au profil oméga, ici au nombre de trois, qui sont moulés sur la peau composite 2.

La figure 2 représente schématiquement un raidisseur 3 présentant un profil oméga.

Le raidisseur 3 présente un profil mâle 4, aussi appelé profil externe, et un profil femelle 5, aussi appelé profil interne, opposée au profil mâle 4.

Le profil mâle 4 forme un profil convexe tandis que le profil femelle 5 forme un profil concave du raidisseur 3.

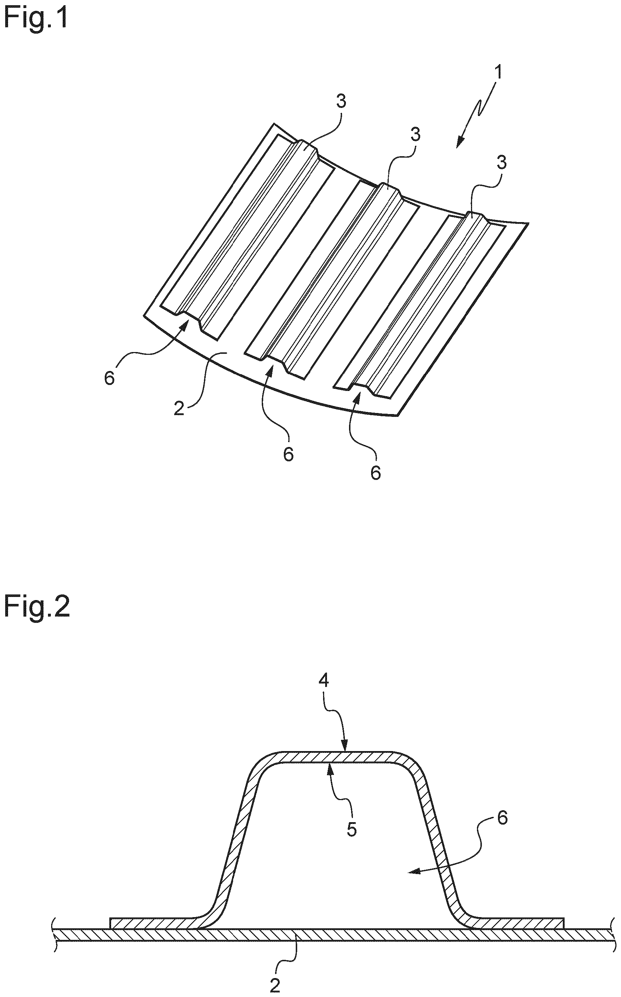

Le profil femelle 5 est généralement orienté vers la peau composite 2, comme cela est visible sur la figure 1.

Le profil femelle 5 comporte un espace intérieur 6, qui est refermé par la peau composite 2 lorsque le raidisseur 3 est solidarisé à celle-ci.

Le panneau composite 1 peut par exemple être réalisé par un procédé de co-cuisson de la peau composite 2 et d'un ou plusieurs raidisseurs 3 composites, préalablement préformés, c'est-à-dire de préformes de raidisseurs composites.

Un tel procédé comprend en général la mise en place d'un ou plusieurs raidisseurs préformés dans un moule comportant des empreintes à la forme du profil mâle d'un raidisseur.

Le raidisseur peut préalablement avoir été préformé selon toute technique connue.

Le procédé comprend ensuite la mise en place d'un noyau dans chacun des raidisseurs, le noyau étant à la forme de l'espace intérieur du profil femelle des raidisseurs.

Puis, le procédé comprend le drapage de la peau composite sur l'ensemble formé par le moule, les raidisseurs et les noyaux, avec la peau composite qui est en contact avec les raidisseurs.

Cette étape est de préférence une étape de type placement de fibres, qui est effectuée sous pression, afin d'assurer la cohésion des couches successives de fibres constituant la peau composite, ainsi que la cohésion entre la peau composite et les raidisseurs. Cette pression peut être assurée par un rouleau en élastomère qui supporte les fibres à déposer.

Lors de cette étape, la pression est également appliquée sur les noyaux, qui doivent présenter une rigidité suffisante à cet effet.

L'ensemble formé par le moule, les raidisseurs, les noyaux, et la peau composite est ensuite mis sous vide, par exemple à l'aide d'un sac à vide.

L'ensemble mis sous vide est cuit par cuisson simultanée (également dite co-cuisson) dans un autoclave.

Les noyaux sont ensuite démoulés et extraits du panneau composite ainsi formé.

Le démoulage et l'extraction des noyaux est une étape présentant un nombre important de difficultés techniques.

En effet, l'effort de frottement important entre les raidisseurs et les noyaux s'oppose à l'extraction de ces derniers hors des raidisseurs.

Cet effort est augmenté en raison du caractère longiforme des raidisseurs, qui est synonyme d'une surface de frottement importante entre les raidisseurs et les noyaux.

Cet effort est également augmenté lorsque le panneau présente une courbure, dans un plan, voire dans deux plans.

Enfin, cet effort est augmenté lorsque la peau composite présente des variations d'épaisseur locales, et qui peuvent localement augmenter l'effort de frottement.

Afin de pallier cet inconvénient, plusieurs variantes de noyaux sont connues de la technique.

D'une part, on connaît notamment des noyaux fusibles, en particulier réalisés dans un matériau métallique présentant un point de fusion sensiblement supérieur à la température de cuisson du composite.

Au cours du procédé de cuisson autoclave, le métal demeure sous forme solide, et le noyau est rigide.

A l'issue de la cuisson, l'ensemble est trempé dans un bain à la température de fusion du matériau métallique, qui devient liquide et peut être récupéré.

Par exemple, le noyau fusible peut être en alliage plomb-bismuth.

D'autre part, on connaît notamment des noyaux solubles, qui sont solubles dans l'eau ou bien destructibles au moyen d'une pression d'eau.

Enfin, on connaît également des noyaux silicone, d'une rigidité et d'une dureté suffisamment importantes pour supporter la pression au cours de l'étape de drapage, mais suffisamment faibles pour que le noyau puisse être extrait convenablement du raidisseur.

Ces solutions présentent toutefois des inconvénients et ne sont pas pleinement satisfaisantes.

Les noyaux fusibles et solubles présentent l'inconvénient d'une dilatation différente du noyau d'une part et du raidisseur d'autre part lors de la cuisson, en raison de la différence de matériau entre le noyau et le raidisseur.

Ceci peut conduire à l'introduction de contraintes mécaniques dans la structure composite résultant du procédé, et ainsi qu'à des fissurations locales dans la pièce.

De plus, le trempage dans un bain pour évacuer le noyau limite la taille des pièces composites pouvant être obtenues par ces procédés.

Dans un cadre industriel, les dimensions de bacs de bains ne permettent pas le trempage de structures de grandes dimensions.

Les noyaux silicones, aux propriétés mécaniques constantes au cours du procédé, présentent l'inconvénient de ne toutefois être ni particulièrement rigides, ni particulièrement souples.

Ainsi, les noyaux silicone ne présentent qu'une rigidité moyenne tout en étant difficilement extractibles des raidisseurs, en particulier lorsque ces derniers sont allongés en longueur.

Il existe ainsi le besoin d'un procédé de moulage de pièces composites avec des noyaux qui présentent à la fois une excellente rigidité, c'est-à-dire une résistance à la pression, et qui puissent être aisément extraits lors du démoulage

### EXPOSÉ DE L'INVENTION

La présente invention vise à remédier à tout ou partie des inconvénients de l'état de la technique cités ci-dessus.

À cet effet, l'invention vise un noyau pour le moulage d'un profilé composite creux sur une pièce composite, comprenant une pluralité de tranches alignées selon une direction longitudinale d'extension du noyau et un organe d'extraction reliant mécaniquement les tranches entre elles de sorte que lesdites tranches soient mobiles en translation selon la direction longitudinale et puissent être rapprochées et éloignées les unes des autres, lesdites tranches étant en outre configurées pour fléchir chacune autour d'un axe transversal sensiblement orthogonal à ladite direction longitudinale, le noyau étant configuré pour adopter :
- une configuration dite de moulage, dans laquelle les tranches sont rapprochées les unes des autres, de sorte à former ensemble un noyau compact configuré pour être disposé dans le profilé composite creux en vue de son moulage sur la pièce composite ; et
- une configuration dite d'extraction, dans laquelle lesdites tranches sont successivement sollicitées mécaniquement selon la direction longitudinale par l'organe d'extraction, de sorte à ce que les tranches fléchissent successivement sensiblement autour de l'axe transversal et soient successivement éloignées les unes des autres selon la direction longitudinale, grâce à quoi les tranches peuvent être progressivement extraites du profilé composite creux selon la direction longitudinale, suite au moulage du profilé composite préformé creux sur la pièce composite.

La conception du noyau sous la forme d'un empilement de tranches mobiles en translation et flexibles permet à la fois de réaliser une telle extraction impliquant un moindre effort, tout en permettant de former un noyau suffisamment rigide et compact dans la configuration de moulage.

Ainsi, le noyau selon l'invention permet de réaliser des structures composites de grandes dimensions, l'extraction d'un noyau particulièrement long étant possible dans la configuration d'extraction, tout en ne nécessitant qu'un effort mécanique limité lors de l'extraction.

Le noyau permet en particulier la réalisation de structures composites présentant des courbures importantes, dans un ou plusieurs plans, tout en permettant une extraction aisée du noyau à l'issue du moulage.

De plus, le noyau, dans sa configuration de moulage, présente des propriétés mécaniques, en particulier de résistance à la pression, au moins équivalentes aux techniques connues, par exemple de noyaux solubles ou fusibles.

En outre, le noyau selon l'invention est entièrement réutilisable à l'issue d'un cycle de moulage, par simple mise en configuration de moulage.

Des caractéristiques particulièrement avantageuses du noyau selon l'invention sont présentées ci-dessous.
- Les tranches peuvent comprendre chacune une première portion et une deuxième portion qui sont articulées l'une avec l'autre, de sorte à ce que ce que lesdites portions puissent se replier l'une vers l'autre lorsque la tranche est sollicitée mécaniquement selon la direction longitudinale.

Dans un tel mode de réalisation, les tranches fléchissent en se pliant autour d'un axe d'articulation sensiblement transversal à la direction longitudinale.
- Les tranches peuvent comprendre chacune une charnière par laquelle la première portion et la deuxième portion sont articulées l'une avec l'autre, la charnière s'étendant dans la direction dudit axe transversal de chaque tranche.

Dans un tel mode de réalisation, les portions peuvent pivoter l'une par rapport à l'autre, et la tranche peut fléchir par repliage des portions l'une vers l'autre.
- Les tranches peuvent comprendre chacune une portion d'épaisseur réduite entre leur première portion et leur deuxième portion, formant une articulation flexible dans la direction dudit axe transversal de chaque tranche.

Dans un tel mode de réalisation, la portion d'épaisseur réduite forme une charnière de matière, la tranche pouvant par ailleurs être réalisée d'un seul tenant.
- Les tranches peuvent être chacune formées par une plaque qui est d'un seul tenant d'épaisseur sensiblement constante et qui est flexible, de sorte à ce que les tranches puissent fléchir autour de l'axe transversal lorsqu'elles sont sollicitées mécaniquement selon la direction longitudinale de chaque tranche.

Dans un tel mode de réalisation, la tranche présente une flexibilité intrinsèque, pouvant être obtenue notamment par une épaisseur suffisamment faible et/ou un matériau constitutif sensiblement souple et flexible, tel qu'en élastomère thermoplastique, par exemple du Santoprène (marque déposée), de sorte que la tranche puisse fléchir autour de l'axe transversal.
- L'organe d'extraction peut être configuré pour être sollicité en traction selon la direction longitudinale.
- L'organe d'extraction peut comprendre une bande de matière solidarisée mécaniquement à intervalles aux tranches.

Par exemple, la bande de matière peut être une bande tissée en fibres de verre.

Par solidarisation à intervalles, on entend que les tranches sont solidarisées localement à la bande de sorte à être séparées les unes des autres lorsque la bande est tendue, et à être rapprochées lorsque la bande est repliée, notamment en accordéon, entre chacune des tranches.
- L'organe d'extraction peut comprendre une bande de matière comportant des organes d'appui disposés à intervalles sur la bande de matière et qui sont chacun configurés pour prendre appui sur une tranche pour l'entrainer en mouvement selon la direction longitudinale lorsque la bande de matière est sollicitée en traction selon la direction longitudinale.

Par exemple, la bande de matière peut être une bande tissée en fibres de verre, et les organes d'appui peuvent être surmoulés sur la bande de matière et être formés par des rondelles d'appui.
- Le noyau peut comprendre en outre un organe de compactage configuré pour maintenir et/ou compresser les tranches les unes contre les autres dans la configuration de moulage.

Un tel organe permet de maintenir le noyau en position de moulage, avec les tranches qui sont maintenues fermement les unes contre les autres.
- Le noyau peut comprendre en outre un talon de tête et un talon de queue, disposés de part et d'autre de la pluralité de tranches alignées, et l'organe de compactage comprenant une bande de matière solidarisée mécaniquement au talon de tête et passant au travers de la pluralité de tranches ainsi que du talon de queue, et le talon de queue comportant préférentiellement un organe de blocage configuré pour bloquer en position la bande de matière.

Selon une alternative, l'organe de compactage peut être solidarisé à une première des tranches de la pluralité de tranches, sans que le noyau ne comporte de talon de tête et/ou de talon de queue.
- Les tranches peuvent être similaires les unes aux autres et comporter chacune une première face et une deuxième face opposée à la première face, par lesquelles les tranches sont configurées pour entrer en contact entre elles, lesdites première face étant convexes, préférentiellement de la forme d'une portion sphérique convexe, et lesdites deuxième face étant également convexes, préférentiellement de la forme d'une portion sphérique convexe, ou concaves, préférentiellement de la forme d'une portion sphérique concave.

Il en résulte un noyau avec des tranches identiques ou similaires, qui sont soit en contact par paires de faces convexes, soit par paires de faces concave et convexe.

Ceci permet de concevoir un noyau avec les tranches qui sont « articulées » les unes avec les autres lorsqu'elles sont rapprochées, et qui permette le moulage de structures composites présentant de fortes courbures.
- La pluralité de tranches peuvent comprendre des tranches dites paires et des tranches dites impaires, alignées en alternance le long de la direction longitudinale, et qui comportent chacune une première face et une deuxième face opposée à la première face, par lesquelles les tranches sont configurées pour entrer en contact entre elles, lesdites première face et deuxième face des tranches impaires étant convexes, préférentiellement de la forme d'une portion sphérique convexe, et lesdites première face et deuxième face des tranches paires étant concaves, préférentiellement de la forme d'une portion sphérique concave.

Ceci permet de concevoir un noyau avec les tranches qui sont « articulées » les unes avec les autres lorsqu'elles sont rapprochées, et qui permette le moulage de structures composites présentant de fortes courbures.
- Les tranches peuvent comprendre en outre chacune au moins une ouverture de transfert de pression, s'étendant selon la direction longitudinale, les ouvertures de transfert de pression de la pluralité de tranches étant en regard les unes des autres dans la configuration de moulage, et les tranches peuvent comprendre chacune au moins une ouverture de distribution de pression, communiquant avec l'au moins une ouverture de transfert de pression et s'étendant transversalement à la direction longitudinale.

Ceci permet de distribuer la pression lors d'une étape de co-cuisson autoclave au cours du moulage, de sorte que la pression soit appliquée également à l'intérieur du profilé composite creux.
- Le noyau peut comprendre en outre un sac à vide tubulaire, dans lequel est disposée la pluralité de tranches.

Ceci permet de réaliser une étape de co-cuisson autoclave de manière particulièrement performante, et permet également de préserver le noyau de détériorations.

Selon un deuxième aspect, l'invention a pour objet un dispositif de moulage, comprenant un moule comportant au moins une empreinte configurée pour recevoir un profilé composite creux, et au moins un noyau tel que décrit ci-avant, configuré pour être disposé dans le profilé composite creux.

Un tel dispositif peut également comprendre un sac à vide, et/ou des moyens de cuisson, et/ou un système de fabrication additive de placement de fibres composites.

Selon un troisième aspect, l'invention a pour objet un procédé de moulage d'un profilé composite creux sur une pièce composite au moyen d'un dispositif de moulage tel que décrit ci-avant, comprenant les étapes suivantes :
- une étape de mise en place d'un profilé composite creux préformé, c'est-à-dire d'une préforme de profilé composite creux, dans une empreinte du moule, le profilé composite creux étant préférentiellement un raidisseur composite ;
- une étape de positionnement d'un noyau dans le profilé composite creux, le noyau étant dans sa configuration de moulage ;
- une étape de drapage de l'ensemble comprenant le profilé composite creux et le noyau avec la pièce composite, la pièce composite étant préférentiellement une peau composite ;
- une étape de co-cuisson de l'ensemble comprenant le profilé composite creux, le noyau avec la pièce composite et la pièce composite ;
- une étape d'extraction du noyau hors du profilé composite creux, dans laquelle le noyau est passé depuis sa configuration de moulage vers sa configuration d'extraction par sollicitation mécanique de l'organe d'extraction selon la direction longitudinale ; l'étape d'extraction étant mise en œuvre soit suite à l'étape de co-cuisson, soit suite à l'étape de drapage et avant l'étape de co-cuisson.

Il convient de préciser que le noyau selon l'invention convient par ailleurs pour toute utilisation dans un procédé de fabrication d'une structure composite, ou autre que composite, et notamment différent du procédé décrit ci-dessus.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 est une vue schématique d'un panneau composite comprenant une peau composite et une pluralité de raidisseurs ;
- la figure 2 est une vue schématique du profil d'un raidisseur présentant un profil oméga, solidarisé à une peau composite ;

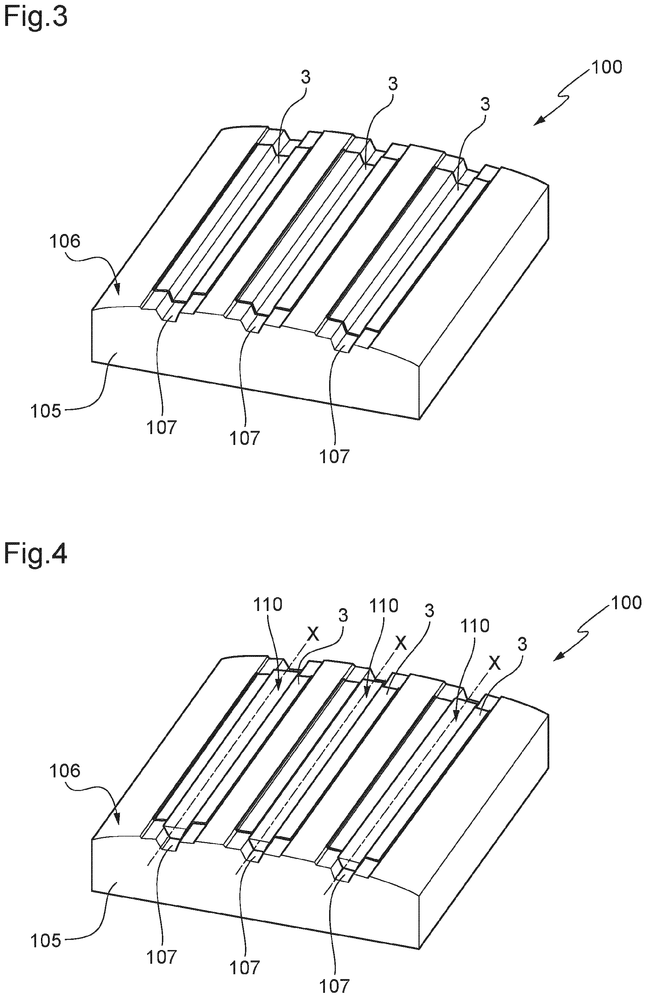

- la figure 3 est une vue schématique et en perspective d'un dispositif de moulage lors d'une première étape d'un procédé de moulage d'un raidisseur composite sur une peau composite;
- la figure 4 est similaire à la figure 3, et illustre le dispositif de moulage lors d'une deuxième étape du procédé de moulage, utilisant un noyau de moulage selon l'invention ;

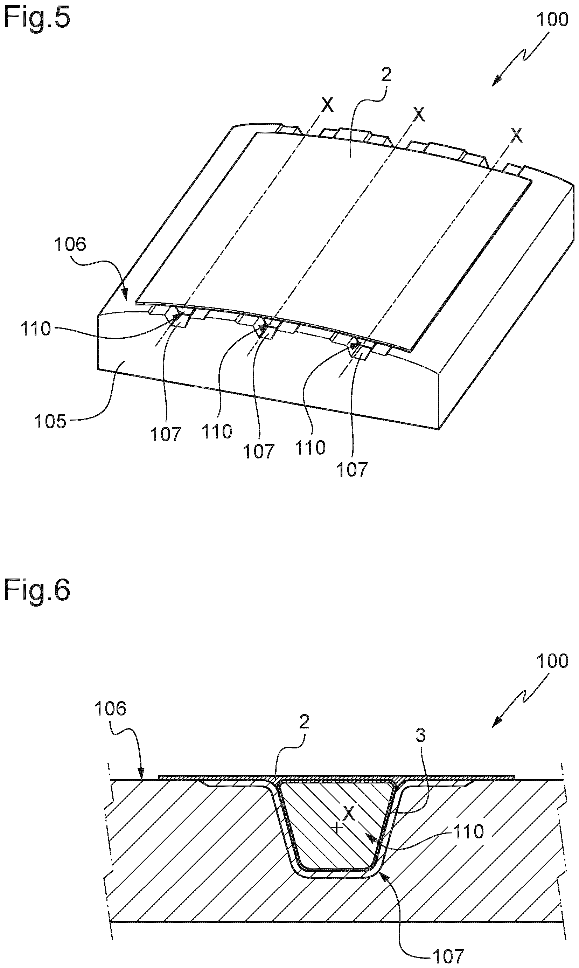

- la figure 5 est similaire aux figures 3 et 4, et illustre le dispositif de moulage lors d'une troisième étape du procédé de moulage, notamment après la dépose des fibres de la peau composite;
- la figure 6 est une vue en coupe détaillée du dispositif de moulage au cours de la troisième étape du procédé de moulage ;

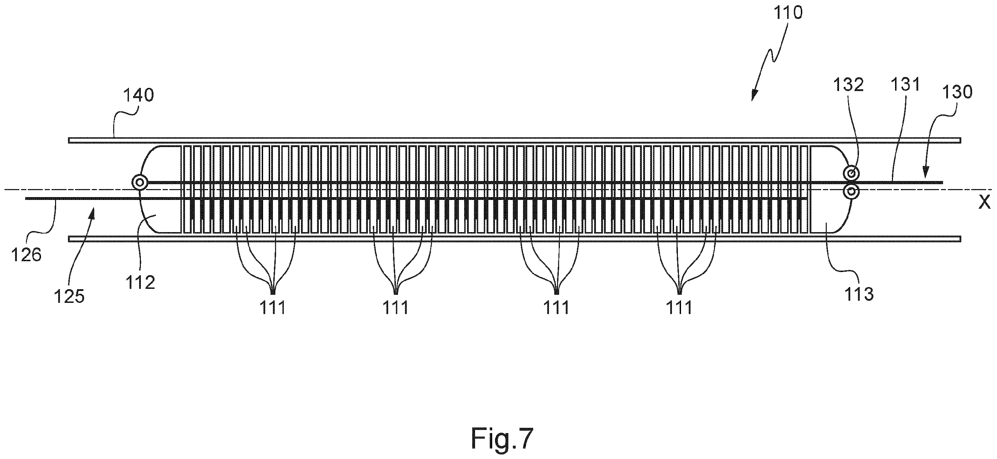

- la figure 7 représente schématiquement et selon une vue en coupe longitudinale le noyau de moulage selon un premier mode de réalisation, le noyau étant dans une configuration de moulage ;

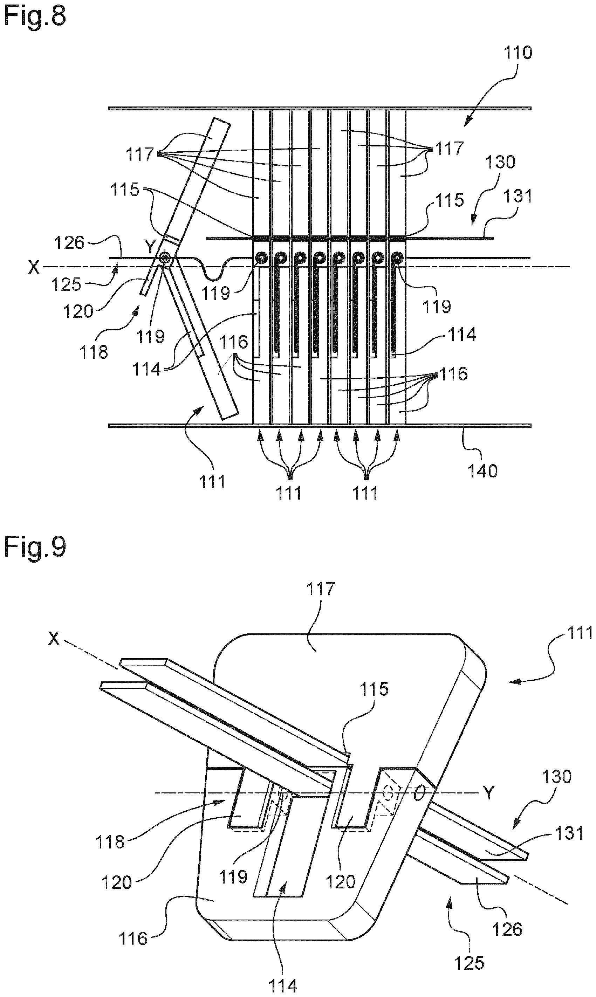

- la figure 8 est une vue détaillée, selon une vue en coupe longitudinale, du noyau de moulage de la figure 7, le noyau étant dans une configuration d'extraction ;
- la figure 9 est une vue détaillée en perspective d'une tranche du noyau de la figure 7 et de la figure 8 ;

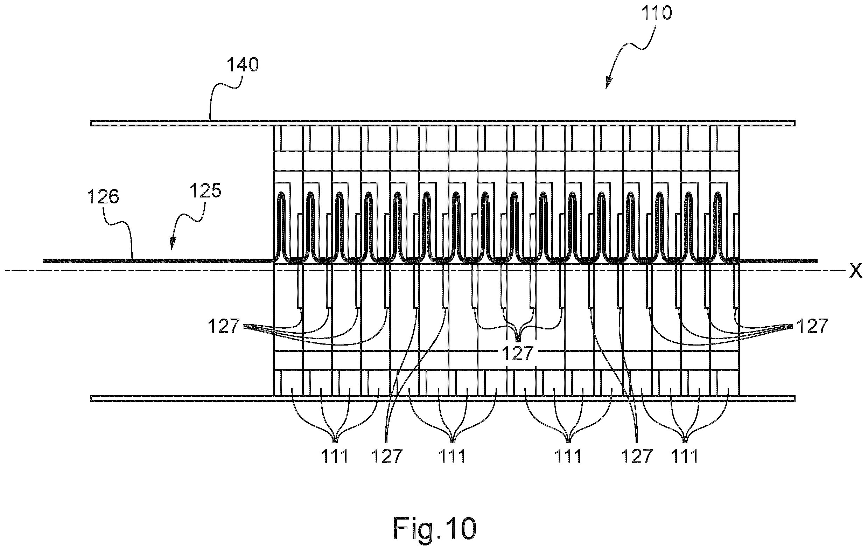

- la figure 10 représente schématiquement et selon une vue en coupe longitudinale le noyau de moulage selon un deuxième mode de réalisation, le noyau étant dans une configuration de moulage ;

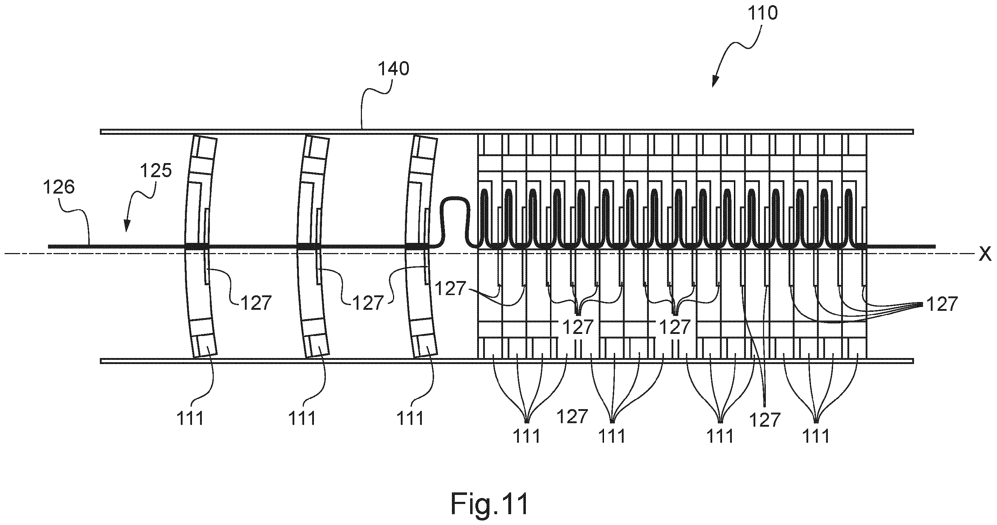

- la figure 11 est similaire à la figure 10, le noyau étant dans une configuration d'extraction ;

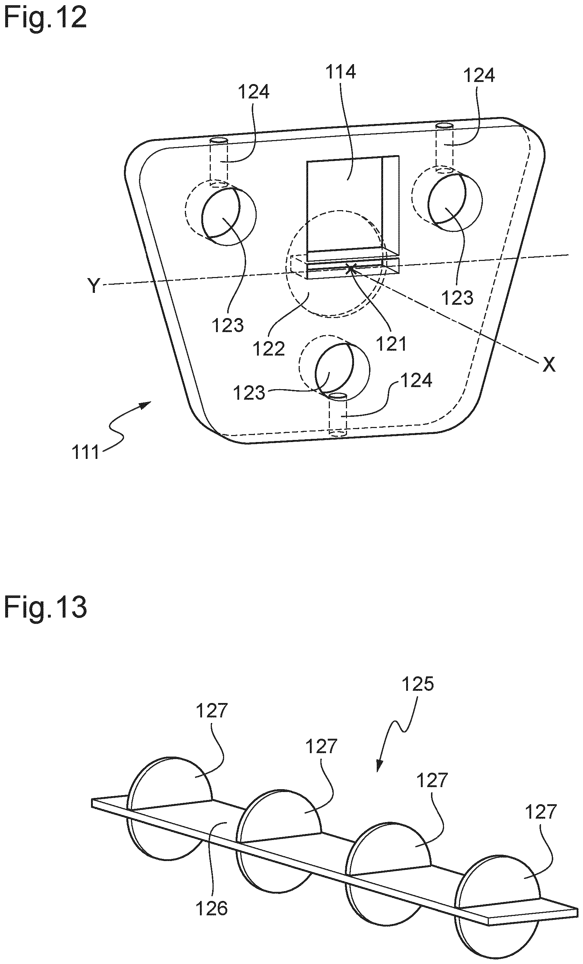

- la figure 12 est une vue détaillée en perspective d'une tranche du noyau de la figure 10 et de la figure 11 ;
- la figure 13 représente schématiquement un organe d'extraction du noyau de la figure 10 et de la figure 11, pris isolément ;

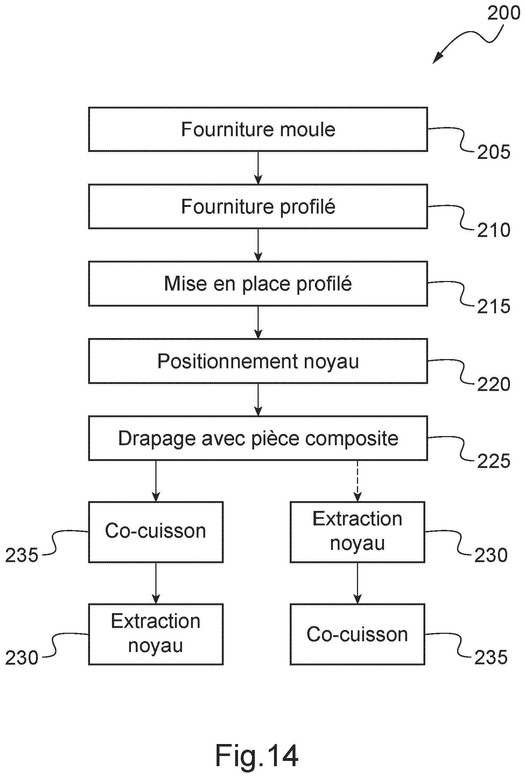

- la figure 14 est un schéma bloc-diagramme d'un procédé de moulage selon l'invention, mis en œuvre au moyen d'un dispositif de moulage selon l'invention.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas nécessairement à l'échelle.

L'invention a pour objet la réalisation d'une structure composite comprenant une pièce composite et un profilé composite creux préformé qui est moulé sur la pièce composite.

La structure composite peut être un panneau composite, par exemple de fuselage d'aéronef, et le profilé composite creux préformé peut être un raidisseur composite, par exemple présentant un profil oméga, sans que cet exemple ne soit limitatif.

La figure 1 décrite précédemment illustre un tel panneau composite 1 générique, comprenant une peau composite 2 et une pluralité de raidisseurs 3, ici au nombre de trois ; et la figure 2 décrite précédemment illustre un raidisseur 3 générique présentant un profil oméga.

Le panneau composite 1, et plus généralement tout autre type de structure composite, peut être réalisé au moyen d'un dispositif 100 de moulage selon l'invention.

La figure 3, la figure 4 et la figure 5 illustrent schématiquement et en perspective le dispositif 100 à différentes étapes d'un procédé de moulage d'un raidisseur 3 composite sur une peau composite 2, tel qu'il est décrit par la suite.

La figure 6 est une vue en coupe détaillée du dispositif 100 à l'étape illustrée sur la figure 5.

Le dispositif 100 comprend un moule 105 comportant une surface extérieure 106 à la forme de la peau composite 2, et au moins une empreinte 107 présentant un profil femelle correspondant à la forme du profil mâle 4 d'un raidisseur 3, qui est ici de type oméga sans qu'une telle forme ne soit limitative.

Ici, le moule 105 comprend trois empreintes 107 sans que ce nombre ne soit limitatif.

Les empreintes 107 sont allongées en longueur selon une direction d'extension longitudinale et sont ici sensiblement rectilignes, mais peuvent également être courbées selon leur direction d'extension.

Dans l'exemple illustré, la surface extérieure 106 du moule 105 est sensiblement courbée, et présente une courbure dans un plan transversal à la direction d'extension des empreintes 107.

Les empreintes 107 sont configurées pour recevoir chacune un raidisseur 3 composite préformé, qui peut être obtenu selon toute technique de préformage connue.

Le dispositif 100 comprend en outre au moins un noyau 110 de moulage, et ici trois noyaux 110 dans l'exemple illustré.

Plus généralement, le nombre de noyaux 110 correspond au nombre d'empreintes 107 que comporte le moule 105.

Chaque noyau 110 est allongé en longueur et s'étendant le long d'une direction longitudinale X d'extension, qui peut être rectiligne ou courbée.

Par exemple, la longueur d'un noyau 110 est de l'ordre de 10 à 20 mètres, par exemple de 15 mètres.

Chaque noyau 110 est configuré pour être disposé à l'intérieur du raidisseur 3, en contact avec le profil femelle 5 du raidisseur 3.

Le noyau 110 présente un profil correspondant au profil de l'espace intérieur 6 du raidisseur 3, et est ici de forme générale trapézoïdale.

L'ensemble formé par le moule 105, le ou les raidisseurs 3, et le ou les noyaux 110 est configuré pour être drapé par la peau composite 2, venant en recouvrement du ou des raidisseurs 3 et du ou des noyaux 110, tel que cela est illustré sur les figures 5 et 6.

Le dispositif 100 peut en outre comprendre un moyen de mise sous vide (non représenté) de l'ensemble formé par le moule 105, le ou les raidisseurs 3, le ou les noyaux 110 et la peau composite 2.

Par exemple, le moyen de mise sous vide est un sac à vide.

Le dispositif peut en outre comprendre un moyen de cuisson (non représenté), pour la cuisson en autoclave de l'ensemble mis sous vide.

Tel que cela est représenté sur la figure 7, qui montre une vue en coupe longitudinale d'un noyau 110 du dispositif 100 selon un premier mode de réalisation, le noyau 110 comprend une pluralité de « vertèbres » ou tranches 111 alignées, selon la direction longitudinale X du noyau 110.

Chacune des tranches 111 comporte une première face et une deuxième face opposée à la première face, par lesquelles les tranches 111 sont configurées pour entrer en contact entre elles.

Les tranches 111 présentent ici une forme générale de plaque, d'épaisseur sensiblement constante, s'étendant chacune dans un plan orthogonal à la direction longitudinale X. En particulier, l'épaisseur des tranches 111 est suffisamment faible pour permettre de réaliser des noyaux 110 présentant une courbure longitudinale, dans un plan voire dans deux plans.

Les tranches 111 forment ensemble un empilement de tranches, aussi appelé par la suite « échine » ou colonne de tranches.

En particulier, le noyau 110 peut comprendre un talon de tête 112 et un talon de queue 113, qui sont disposés de part et d'autre de l'empilement de tranches 111. Le talon de tête 112 et le talon de queue 113 peuvent être sensiblement différents des tranches 111, et en particulier présenter une forme sensiblement bombée et/ou être plus épaisses que les tranches 111.

Le noyau 110 peut adopter une configuration de moulage, dans laquelle les tranches 111 de la colonne sont rapprochées les unes des autres selon la direction longitudinale X.

En particulier, dans cette configuration, chacune les tranches 111 est en contact direct avec ses tranches 111 voisines.

La figure 7 représente le noyau 110 dans la configuration de moulage, avec les tranches 111 qui sont représentées légèrement espacées les unes des autres pour des raisons de lisibilité de la figure.

Dans la configuration de moulage, les tranches 111 forment un noyau compact et sensiblement rigide, qui est apte au moulage du raidisseur 3 sur la peau composite 2.

Les tranches 111 sont chacune réalisée dans un matériau suffisamment rigide pour former un noyau de moulage, en particulier pour assurer une contrepression suffisante lors du drapage de la pièce composite, qui peut être une peau composite 2.

Par exemple, les tranches 111 sont réalisées en matière thermoplastique, ce qui permet également une fabrication des tranches 111 par moulage en grandes quantités, de façon économique.

Le noyau 110 peut en outre adopter une configuration d'extraction, représentée en détail à la figure 8, dans laquelle au moins une partie des tranches 111 sont à distance les unes des autres.

En outre, dans cette configuration, les tranches 111 fléchissent autour d'une direction transversale Y, sensiblement orthogonale localement à la direction longitudinale X d'extension du noyau.

Ainsi, les tranches 111 peuvent être déplacées le long de la direction longitudinale X sensiblement sans effort, permettant l'extraction du noyau 110.

Sur la figure 8, une première des tranches 111 est déplacée selon la direction longitudinale X et se trouve en éloignement des autres tranches 111 qui sont encore en contact les unes avec les autres sur cette figure.

Le noyau 110 comprend un organe d'extraction 125 reliant mécaniquement les tranches 111 les unes aux autres, de manière à ce que les tranches 111 puissent être rapprochées et éloignées les unes des autres, c'est-à-dire qu'elles sont mobiles en translation les unes par rapport aux autres.

L'organe d'extraction 125 est configuré pour permettre le passage du noyau 110 de la configuration de moulage à la configuration d'extraction, par sollicitation mécanique de l'organe d'extraction 125.

L'organe d'extraction 125 permet l'extraction progressive des tranches 111 du raidisseur 3, après moulage. Autrement dit, grâce à l'organe d'extraction 125, les tranches 111 peuvent être tirées en chapelet hors du raidisseur 3.

En particulier, l'organe d'extraction 125 peut être un élément de traction.

Dans l'exemple illustré, l'organe d'extraction 125 est formé par une première bande 126 de matière.

L'élément de traction peut toutefois également être formé par un câble, une chaîne, une tige articulée, une tresse, etc.

Dans le premier mode de réalisation illustré, la première bande 126 est solidarisée mécaniquement à chacune des tranches 111, par exemple selon une liaison pivot sensiblement orthogonale à la direction longitudinale X.

Les tranches 111 sont assujetties mécaniquement à la première bande 126 à intervalles, en particulier à intervalles réguliers.

Ainsi, lorsque la première bande 126 est tendue, les tranches 111 sont à distance les unes des autres et peuvent être chacune entraînée en translation selon la direction longitudinale X.

Lorsque le noyau 110 est en configuration de moulage, c'est-à-dire lorsque les tranches 111 sont au contact les unes avec les autres, la bande première 126 peut être repliée sur elle-même.

A cet effet, chacune des tranches 111 peut comprendre un logement 114 dans lequel la première bande 126 peut être logée dans la configuration de moulage.

Le noyau 110 peut en outre comprendre un organe de compactage 130, configuré pour maintenir les tranches 111 les unes contre les autres dans la direction longitudinale X.

Par exemple, l'organe de compactage 130 est un élément de traction.

Dans l'exemple illustré, l'organe de compactage 130 est formé par une deuxième bande 131 de matière.

L'élément de traction peut toutefois également être formé par un câble, une chaîne, une tige, une tresse, etc.

Dans le premier mode de réalisation illustré, la deuxième bande 131 est solidarisée mécaniquement au talon de tête 112, et traverse l'ensemble de la colonne de tranches 111 ainsi que le talon de queue 113.

A cet effet, les tranches 111, ainsi que le talon de queue 113 le cas échéant, peuvent être munies chacune d'une ouverture de passage 115, à travers laquelle la deuxième bande 131 peut passer.

Le talon de queue 113 peut comporter un organe de blocage 132, configuré pour bloquer en position la deuxième bande 131, notamment en vue de maintenir un effort de compression exercé sur les tranches 111 par le serrage de la deuxième bande 131.

Afin de pouvoir fléchir, les tranches 111 présentent une capacité de déformation dans un plan sensiblement orthogonal à la direction longitudinale X.

Plus précisément, les tranches 111 sont configurées pour fléchir chacune autour de l'axe transversal Y de chaque tranche 111, qui est sensiblement orthogonal (au moins localement) à la direction longitudinale X du noyau 110, lorsqu'elles sont sollicitées mécaniquement selon la direction longitudinale X.

Par « fléchir », on entend le fait que les tranches 111 se ploient ou plient, ceci pouvant comprendre notamment une pliure nette par exemple au moyen d'une articulation, ou encore une flexion générale de la tranche, par exemple en raison de l'élasticité intrinsèque de la tranche 111, ou une combinaison de ces exemples.

La figure 9 illustre en perspective une tranche 111 selon le premier mode de réalisation, prise isolément.

La tranche 111 comporte une première portion 116 et une deuxième portion 117, qui sont articulées l'une avec l'autre.

En particulier, la tranche 111 comporte ici une charnière 118 comprenant un axe de charnière 119.

Ici, l'axe de charnière 119 forme également la liaison pivot entre la tranche 111 et la première bande 126.

La charnière 118 est ici à articulation unidirectionnelle, c'est-à-dire que la première portion 116 et deuxième portion 117 ne peuvent être repliées l'une vers l'autre que dans un seul sens selon la direction longitudinale X.

En particulier, le repliage de la première portion 116 et de la deuxième portion 117 l'une vers l'autre n'est ici possible que dans le sens opposé au sens de l'extraction selon la direction longitudinale X, et la première portion 116 et la deuxième portion 117 demeurent sensiblement alignées dans un même plan transversal lors d'une sollicitation dans le sens opposé au sens d'extraction.

A cet effet, la deuxième portion 117 peut comporter une ou plusieurs pattes de butée 120 s'étendant par-delà la charnière 118, et prenant appui sur la première portion 116 lorsque la première portion 116 et deuxième portion 117 sont sensiblement alignées dans un même plan.

Selon une alternative, la charnière 118 peut également être formée par un amincissement local de matière de la tranche 111.

Les figures 10 et 11 montrent le noyau 110 selon un deuxième mode de réalisation, respectivement dans la configuration de moulage et dans la configuration d'extraction.

La figure 12 illustre une tranche 111 selon le deuxième mode de réalisation, prise isolément.

Dans le deuxième mode de réalisation, les tranches 111 sont d'un seul tenant.

Les tranches 111 sont ici déformables en raison de leur flexibilité intrinsèque dans un plan sensiblement orthogonal à la direction longitudinale X.

Par exemple, à cet effet, les tranches 111 sont en matériau élastomère, préférentiellement en élastomère thermoplastique, par exemple en Santoprène (marque déposée).

La figure 13 illustre schématiquement la première bande 126 selon le deuxième mode de réalisation.

La première bande 126 comporte ici des organes d'appui configurés pour prendre appui sur les tranches 111 pour les entrainer en translation selon la direction longitudinale X, lorsqu'un effort de traction est exercé sur la première bande 126.

Les organes d'appui sont formés à intervalles, en particulier à intervalles réguliers, sur la première bande 126

Par exemple, les organes d'appui sont formés par des rondelles d'appui 127, qui peuvent être surmoulées sur la première bande 126.

Les tranches 111 peuvent comprendre une ouverture de passage 121 à travers la première bande 126 peut passer.

Les tranches 111 peuvent également comprendre un logement 122 configuré pour recevoir une rondelle d'appui 127.

En outre, dans le deuxième exemple de réalisation, les tranches 111 comprennent des ouvertures de transfert de pression 123, s'étendant sensiblement selon la direction longitudinale X, et des ouvertures de distribution de la pression 124, s'étendant sensiblement transversalement à la direction longitudinale X.

Les ouvertures de transfert de pression 123 de la pluralité de tranches 111 sont sensiblement en regard les unes des autres dans la configuration de moulage, et forment ensemble une seule ouverture traversant axialement l'empilement de tranches 111.

Les ouvertures de transfert de pression 123 et les ouvertures de distribution de la pression 124 communiquent, c'est-à-dire qu'elles sont reliées fluidiquement.

Les ouvertures de distribution de la pression 124 débouchent sur le pourtour de chaque tranche 111.

Les ouvertures de transfert de pression 123 et les ouvertures de distribution de la pression 124 forment ensemble un réseau de distribution de la pression autoclave.

Il convient de souligner que dans le premier mode de réalisation, les tranches 111 peuvent également comporter de telles ouvertures 123 et 124.

Quel que soit le mode de réalisation considéré, le noyau 110 peut comprendre un sac à vide tubulaire 140, formant un boyau dans lequel est disposé l'empilement de tranches 111.

Notamment lorsque les tranches 111 présentent des ouvertures de transfert de pression 123 et les ouvertures de distribution de la pression 124, la pression autoclave peut ainsi être appliquée sur le profil femelle 5 du raidisseur 3.

Contrairement au premier mode de réalisation illustré, le noyau 110 ne comprend ici pas d'organe de compactage 130, bien qu'il puisse comprendre un tel organe de compactage 130 par exemple similaire ou identique à celui décrit en lien avec le premier mode de réalisation.

Contrairement au premier mode de réalisation illustré, le noyau 110 ne comporte pas de talon de tête 112 ou de talon de queue 113, bien qu'il puisse comprendre de tels talon de tête 112 et/ou talon de queue 113, par exemple similaires ou identiques à ceux décrits en lien avec le premier mode de réalisation.

Dans les exemples illustrés, les tranches 111 présentent une première face et une deuxième face qui sont sensiblement planes.

Selon un exemple de réalisation non représenté, les tranches 111 peuvent toutefois également présenter une première face et une deuxième face qui ne sont pas sensiblement planes.

Par exemple, les tranches 111 peuvent présenter une première face et une deuxième face chacune convexe, préférentiellement de la forme d'une portion convexe cylindrique ou sphérique.

Selon un autre exemple, les tranches 111 peuvent présenter une première face convexe, préférentiellement de la forme d'une portion convexe cylindrique ou sphérique, et une deuxième face concave, préférentiellement de la forme d'une portion concave cylindrique ou sphérique, les premières et deuxièmes face de deux tranches adjacentes étant configurées pour entrer respectivement en contact l'une avec l'autre.

En outre, dans les exemples illustrés, les tranches 111 sont sensiblement identiques ou similaires.

Selon un exemple de réalisation non représenté, la pluralité de tranches 111 comprend des tranches 111 dites paires et des tranches 111 dites impaires, alignées en alternance le long de la direction longitudinale X, présentant des faces différentes.

En particulier, les première face et deuxième face des tranches 111 impaires peuvent être convexes, préférentiellement de la forme d'une portion convexe cylindrique ou sphérique, et les première face et deuxième face des tranches 111 paires peuvent être concaves, préférentiellement de la forme d'une portion convexe cylindrique ou sphérique.

Le panneau composite 1 de la figure 1, et plus généralement toute structure composite générique, peut être obtenue au moyen d'un procédé 200 de moulage, illustré par le schéma bloc-diagramme de la figure 14.

Le procédé 200 de moulage peut en particulier être mis en œuvre au moyen d'un dispositif 100 de moulage selon l'invention, tel qu'illustré sur les figures 3 à 6 à différentes étapes du procédé 200 de moulage.

Le procédé 200 comprend une étape 205 de fourniture d'un moule 105 comportant des empreintes 107 à la forme du profil mâle 4 d'un raidisseur 3, tel que cela est illustré sur la figure 3 notamment.

Le procédé 200 comprend ensuite une étape 210 de fourniture d'au moins un raidisseur 3 composite préformé, c'est-à-dire d'une préforme de raidisseur composite. Une telle préforme de raidisseur peut avoir été obtenue par tout procédé de fabrication, connu de la technique.

Le procédé 200 comprend ensuite une étape 215 de mise en place de l'au moins un raidisseur 3 composite préformé dans le moule 105, avec le profil mâle 4 qui entre en contact avec les empreintes 107, tel que cela est illustré sur la figure 4.

Puis, le procédé 200 comprend une étape 220 de positionnement d'un noyau 110 dans chaque raidisseur 3 composite préformé, de sorte que le noyau 110 soit ensuite placé dans l'espace intérieur 6 en contact avec le profil femelle 5 du raidisseur 3.

Le noyau 110 est dans sa configuration de moulage au cours de cette étape, avec les tranches 111 qui sont rapprochées et en particulier au contact les unes des autres.

Par exemple, à cet effet, l'organe de compactage 130 peut être sollicité avec de compacter le noyau 110 lorsque le noyau comprend un tel organe. En particulier, la deuxième bande 131 peut être sollicitée en traction, puis bloquée en position au moyen de l'organe de blocage 132.

Le procédé 200 comprend ensuite une étape 225 de drapage de l'ensemble comprenant l'au moins un raidisseur 3 et le ou les noyaux 110, avec une pièce composite, qui est par exemple une peau composite 2.

En particulier, l'étape 225 de drapage est une étape de placement de fibres, au cours de laquelle les fibres d'un renfort d'un matériau composite semi-fini sont déposés sur la surface extérieure 106 du moule 105, ainsi que sur l'ensemble comprenant l'au moins un raidisseur 3 et le ou les noyaux 110.

Par exemple, l'étape 225 de drapage comprend le dépôt des fibres par une tête de placement de fibres faisant partie d'un système de fabrication additive. Lors de cette étape, la tête de placement de fibres exerce localement une pression importante sur le moule 105 et sur les noyaux 110.

Selon une variante, le dispositif 100 peut lui-même comprendre un tel système de fabrication additive.

Les figures 5 et 6 illustrent le dispositif 100 après l'étape 225 de drapage.

Ensuite, selon une première variante du procédé 200, le procédé 200 comprend une étape 230 d'extraction du noyau 110 hors du raidisseur 3.

Au cours de l'étape 230 d'extraction, le noyau 110 est passé de sa configuration de moulage vers sa configuration d'extraction.

A cet effet, l'organe d'extraction 125 est sollicité mécaniquement, par exemple en traction dans le premier et deuxième mode de réalisation illustré.

La première bande 126 est tirée selon la direction longitudinale X, ce qui a pour effet d'exercer une traction sur la première des tranches 111. Ceci conduit la première tranche 111 à fléchir, par exemple soit par pliage autour de la charnière 119 comme dans le premier mode de réalisation (figure 8) soit par flexion de la tranche d'un seul tenant comme dans le deuxième mode de réalisation (figure 11), ce qui a pour effet que la première des tranches 111 peut être déplacée selon la direction longitudinale X, sensiblement sans effort une fois fléchie.

La première tranche 111 se déplace selon la direction longitudinale X, jusqu'à ce que la portion de la première bande 126 située entre la première des tranches 111 et la deuxième des tranches 111 soit tendue, et entraine à son tour la flexion de la deuxième des tranches 111, puis son déplacement selon la direction longitudinale X, et ainsi de suite (voir la figure 11 qui illustre les trois premières des tranches 111 qui sont ainsi entrainées).

Les tranches 111 sont ainsi progressivement extraites du raidisseur 3 selon la direction longitudinale X, en chapelet.

Lorsque la totalité de la pluralité de tranches 111 a été extraite du raidisseur, le sac à vide tubulaire 140 reste en contact avec le profil intérieur du raidisseur afin de permettre de transférer la pression de l'autoclave lors de la co-cuisson de l'ensemble peau composite - raidisseur.

Le noyau 110 peut ensuite être réutilisé, en étant à nouveau mis dans sa configuration de moulage

Le procédé 200 comprend ensuite une étape 235 de co-cuisson de l'ensemble comprenant l'au moins un raidisseur, le ou les noyaux 110 ainsi que la peau composite 2.

Au cours de cette étape de co-cuisson, les fibres composites du ou des raidisseurs 3 ainsi que de la peau composite 2 sont liés, et solidarisées.

L'étape 235 de co-cuisson est de préférence une étape de cuisson autoclave, c'est-à-dire sous pression. A cet effet, l'ensemble peut être placé dans un sac à vide.

Au cours de cette étape, les ouvertures 123 et 124 des tranches 111 assurent une mise sous pression de l'intérieur du raidisseur 3.

Selon une deuxième alternative, le procédé comprend l'étape 230 d'extraction à la suite de l'étape 235 de co-cuisson, plutôt qu'à la suite de l'étape 225 de drapage et avant l'étape 235 de co-cuisson.

Dans un tel cas, le noyau 110 comprend avantageusement un sac à vide tubulaire 140.

On rappelle plus généralement que l'invention ne se limite pas aux exemples décrits et illustrés.

En particulier, le noyau selon l'invention peut être mis en œuvre pour tout type de procédé de fabrication différent du moulage de composites, dans lequel un noyau de moulage rigide est utilisé.

## Revendications

1. Noyau (110) pour le moulage d'un profilé composite creux sur une pièce composite, **caractérisé en ce que** le noyau comprend une pluralité de tranches (111) alignées selon une direction longitudinale (X) d'extension du noyau et un organe d'extraction (125) reliant mécaniquement les tranches entre elles de sorte que lesdites tranches soient mobiles en translation selon la direction longitudinale et puissent être rapprochées et éloignées les unes des autres, lesdites tranches étant en outre configurées pour fléchir chacune autour d'un axe transversal (Y) sensiblement orthogonal à ladite direction longitudinale,
et **en ce que** le noyau (110) est configuré pour adopter :
- une configuration dite de moulage, dans laquelle les tranches (111) sont rapprochées les unes des autres, de sorte à former ensemble un noyau compact configuré pour être disposé dans le profilé composite creux en vue de son moulage sur la pièce composite ; et
- une configuration dite d'extraction, dans laquelle lesdites tranches (111) sont successivement sollicitées mécaniquement selon la direction longitudinale par l'organe d'extraction, de sorte à ce que les tranches fléchissent successivement sensiblement autour de l'axe transversal et soient successivement éloignées les unes des autres selon la direction longitudinale (X), grâce à quoi les tranches peuvent être progressivement extraites du profilé composite creux selon la direction longitudinale, suite au moulage du profilé composite préformé creux sur la pièce composite.

2. Noyau (110) selon la revendication 1, dans lequel les tranches (111) comprennent chacune une première portion (116) et une deuxième portion (117) qui sont articulées l'une avec l'autre, de sorte à ce que ce que lesdites portions puissent se replier l'une vers l'autre lorsque la tranche est sollicitée mécaniquement selon la direction longitudinale.

3. Noyau (110) selon la revendication 2, dans lequel les tranches (111) comprennent chacune une charnière (118) par laquelle la première portion (116) et la deuxième portion (117) sont articulées l'une avec l'autre, la charnière s'étendant dans la direction dudit axe transversal de chaque tranche.

4. Noyau (110) selon la revendication 2, dans lequel les tranches (111) comprennent chacune une portion d'épaisseur réduite entre leur première portion et leur deuxième portion, formant une articulation flexible dans la direction dudit axe transversal de chaque tranche.

5. Noyau (110) selon la revendication 1, dans lequel les tranches (111) sont chacune formées par une plaque qui est d'un seul tenant d'épaisseur sensiblement constante et qui est flexible, de sorte à ce que les tranches puissent fléchir autour de l'axe transversal lorsqu'elles sont sollicitées mécaniquement selon la direction longitudinale de chaque tranche.

6. Noyau (110) selon l'une quelconque des revendications 1 à 5, dans lequel l'organe d'extraction (125) est configuré pour être sollicité en traction selon la direction longitudinale.

7. Noyau (110) selon la revendication 6, dans lequel l'organe d'extraction (125) comprend une bande (126) de matière solidarisée mécaniquement à intervalles aux tranches (111).

8. Noyau (110) selon la revendication 6, dans lequel l'organe d'extraction (125) comprend une bande (126) de matière comportant des organes d'appui (127) disposés à intervalles sur la bande de matière et qui sont chacun configurés pour prendre appui sur une tranche (111) pour l'entrainer en mouvement selon la direction longitudinale lorsque la bande de matière est sollicitée en traction selon la direction longitudinale.

9. Noyau (110) selon l'une quelconque des revendications 1 à 8, comprenant en outre un organe de compactage (130) configuré pour maintenir et/ou compresser les tranches (111) les unes contre les autres dans la configuration de moulage.

10. Noyau (110) selon la revendication 9, comprenant en outre un talon de tête (112) et un talon de queue (113), disposés de part et d'autre de la pluralité de tranches (111) alignées, et l'organe de compactage (130) comprenant une bande (131) de matière solidarisée mécaniquement au talon de tête et passant au travers de la pluralité de tranches ainsi que du talon de queue, et le talon de queue comportant préférentiellement un organe de blocage (132) configuré pour bloquer en position la bande de matière.

11. Noyau (110) selon l'une quelconque des revendications 1 à 10, dans lequel les tranches (111) sont similaires les unes aux autres et comportent chacune une première face et une deuxième face opposée à la première face, par lesquelles les tranches sont configurées pour entrer en contact entre elles, lesdites première face étant convexes, préférentiellement de la forme d'une portion sphérique convexe, et lesdites deuxième face étant également convexes, préférentiellement de la forme d'une portion sphérique convexe, ou concaves, préférentiellement de la forme d'une portion sphérique concave.

12. Noyau (110) selon l'une quelconque des revendications 1 à 10, dans lequel la pluralité de tranches (111) comprend des tranches dites paires et des tranches dites impaires, alignées en alternance le long de la direction longitudinale, et qui comportent chacune une première face et une deuxième face opposée à la première face, par lesquelles les tranches sont configurées pour entrer en contact entre elles, lesdites première face et deuxième face des tranches impaires étant convexes, préférentiellement de la forme d'une portion sphérique convexe, et lesdites première face et deuxième face des tranches paires étant concaves, préférentiellement de la forme d'une portion sphérique concave.

13. Noyau (110) selon l'une quelconque des revendications 1 à 12, les tranches (111) comprenant en outre chacune au moins une ouverture de transfert de pression (123), s'étendant selon la direction longitudinale, les ouvertures de transfert de pression de la pluralité de tranches étant en regard les unes des autres dans la configuration de moulage, et les tranches comprenant chacune au moins une ouverture de distribution de pression (124), communiquant avec l'au moins une ouverture de transfert de pression et s'étendant transversalement à la direction longitudinale.

14. Noyau (110) selon l'une quelconque des revendications 1 à 13, comprenant en outre un sac à vide tubulaire (140), dans lequel est disposée la pluralité de tranches (111).

15. Dispositif (100) de moulage, comprenant un moule (105) comportant au moins une empreinte (107) configurée pour recevoir un profilé composite creux (3), et au moins un noyau (110) conforme à l'une quelconque des revendications 1 à 14, configuré pour être disposé dans le profilé composite creux.

16. Procédé (200) de moulage d'un profilé composite creux (3) sur une pièce composite (2) au moyen d'un dispositif (100) de moulage conforme à la revendication 15, comprenant les étapes suivantes :
- une étape (215) de mise en place d'un profilé composite creux (3) préformé dans une empreinte (107) du moule, le profilé composite creux étant préférentiellement un raidisseur composite ;
- une étape (220) de positionnement d'un noyau (110) dans le profilé composite creux, le noyau étant dans sa configuration de moulage ;
- une étape (225) de drapage de l'ensemble comprenant le profilé composite creux (3) et le noyau (110) avec la pièce composite (2), la pièce composite étant préférentiellement une peau composite ;
- une étape (235) de co-cuisson de l'ensemble comprenant le profilé composite creux, le noyau avec la pièce composite et la pièce composite ;
- une étape (230) d'extraction du noyau (110) hors du profilé composite creux, dans laquelle le noyau est passé depuis sa configuration de moulage vers sa configuration d'extraction par sollicitation mécanique de l'organe d'extraction selon la direction longitudinale ;
l'étape (230) d'extraction étant mise en œuvre soit suite à l'étape (235) de co-cuisson, soit suite à l'étape (225) de drapage et avant l'étape (235) de co-cuisson.
